# EUROPEAN PATENT SPECIFICATION

(11) **EP 4 534 302 B1**
(45) Date of publication and mention of the grant of the patent: **02.12.2026**
(21) Application number: 24181183.5
(22) Date of filing: 10.06.2024
(51) Int. Cl.: B60C 23/20, B60W 40/10, B60T 8/171, B60W 50/00, B60W 40/12, B60W 40/068

(54) **PREDICTION OF ROAD SURFACE OPERATING CONDITIONS**
VORHERSAGE VON STRASSENOBERFLÄCHENBETRIEBSBEDINGUNGEN
PRÉDICTION DE CONDITIONS DE FONCTIONNEMENT DE SURFACE DE ROUTE

(30) Priority: 06.10.2023 WO PCT/EP2023/077683
(43) Date of publication of application: 09.04.2025
(73) Proprietor: VOLVO TRUCK CORPORATION, 405 08 Göteborg (SE)
(72) Inventor: OTOOFI, Mohammad, Loughborough, LE11 3TU (GB); PANAHANDEH, Ghazaleh, 414 67 GÖTEBORG (SE); FAGER, Olle, 424 90 OLOFSTORP (SE); HENDERSON, Leon, 438 92 HÄRRYDA (SE); LAINE, Leo, 414 84 GÖTEBORG (SE); MIDGLEY, William, North Sydney, NSW 2060 (AU); FLEMING, James, Loughborough, LE11 5YZ (GB)
(74) Representative: Ström & Gulliksson AB

(56) References cited:
- EP-A1- 3 581 454
- EP-A1- 4 215 877
- EP-B1- 3 581 454
- US-A1- 2019 217 864
- US-B2- 10 936 940
- US-B2- 9 085 205

## Description

### TECHNICAL FIELD

The invention relates generally to vehicle control. In particular aspects, the invention relates to prediction of road surface operating conditions for a vehicle. The invention can be applied to heavy-duty vehicles, such as trucks, buses, and construction equipment, among other vehicle types. Other examples include equipment for mining, construction, and forestry. Although the invention may be described with respect to a particular vehicle, the disclosure is not restricted to any particular vehicle.

### BACKGROUND

Generally, vehicle control may be improved if operating condition parameter values are known, or at least measured or estimated with some suitable accuracy. Examples of such useful parameters include rolling resistance and tire-road friction. Alternatively or additionally, operating condition parameter values comprise, or be derivable from, road surface operating conditions.

A problem with existing approaches for vehicle control is that there is no reliable information regarding upcoming (i.e., future) parameter values, such as upcoming road surface operating conditions of a vehicle. Thereby, it becomes cumbersome to plan vehicle control actions adequately ahead of time. For example, safety issues and/or under-utilization of available control capacity may occur if the vehicle control uses currently measured parameter values as an estimation of upcoming parameter values.

Therefore, there is a need for alternative approaches for determining operating conditions for a vehicle. For example, approaches for determining upcoming operating conditions, including approaches for predicting road surface operating conditions of a vehicle, might be particularly beneficial.

EP 3581454 B1 describes an approach for utilizing aggregated weather data for road surface condition and road surface friction estimates.

US 10,936,940 B2 describes an approach for predicting road friction within a road network.

US 2019/0217864 A1 describes a road surface condition prediction system.

### SUMMARY

Various aspects may aim to solve, mitigate, alleviate, or eliminate at least some of the above or other disadvantages.

According to the invention there is provided a computer system with the features of claim 1 and a computer-implemented method with the features of claim 5. Preferred embodiments are the subject matter of the dependent claims.

According to a first aspect of the disclosure, a computer system is provided for prediction of road surface operating conditions of a vehicle. The computer system comprises processing circuitry configured to receive at least a portion of a shared operating conditions model from a remote statistics processor, receive real-time sensor measurement data from sensors of the vehicle, determine a vehicle-specific operating conditions model based on the portion of the shared operating conditions model and the real-time sensor measurement data, and use the vehicle-specific operating conditions model to predict upcoming operating conditions for the vehicle. The first aspect of the disclosure may seek to provide information relating to road surface operating conditions of a vehicle. A technical benefit may include improved vehicle control. A technical benefit may include that the vehicle control can benefit from collective knowledge based on measurements by a fleet of many vehicles, as well as currently relevant measurements for the vehicle under consideration.

According to a second aspect of the disclosure, a vehicle is provided, which comprises the computer system of the first aspect and one or more sensor(s) for prediction of road surface operating conditions of the vehicle. The second aspect of the disclosure may seek to provide a vehicle with improved vehicle control. A technical benefit may include that the vehicle is capable to operate in a safe and efficient manner.

Optionally in some examples, including in at least one preferred example, the one or more sensor(s) of the vehicle may comprise at least one visual sensor and a sensor arrangement for determining upcoming operating conditions of a wheel of the vehicle, wherein the sensor arrangement comprises at least one temperature sensor mounted in vicinity of the wheel, and configured to measure a ground surface temperature of a portion of the ground surface to be traveled by the wheel and/or a tire temperature of the outer surface of a tire of the wheel. A technical benefit may include that information derived from visual inspection of the road surface are combined with information specifically relevant for the wheel, thereby improving the prediction of road surface operating conditions of a vehicle.

Optionally in some examples, including in at least one preferred example, the at least one temperature sensor may be further configured to measure an ambient temperature above the portion of the ground surface to be traveled by the wheel, and/or the sensor arrangement may further comprise a humidity sensor mounted in vicinity of the wheel, and configured to measure an ambient humidity above the portion of the ground surface to be traveled by the wheel, and/or the sensor arrangement may further comprise an audio sensor mounted in vicinity of the wheel, and configured to measure sound above the portion of the ground surface to be traveled by the wheel. A technical benefit may include that information specifically relevant for the wheel is further improved, thereby further improving the prediction of road surface operating conditions of a vehicle.

According to a third aspect of the disclosure, a computer system is provided for prediction of road surface operating conditions of a specific vehicle. The computer system comprises processing circuitry configured to receive respective sensor measurement data from a plurality of vehicles, determine a shared operating conditions model based on the measurement data, and cause provision of at least a portion of the shared operating conditions model to the specific vehicle. The third aspect of the disclosure may seek to provide information relating to road surface operating conditions of a one or more vehicle(s). A technical benefit may include improved vehicle control. A technical benefit may include that the vehicle control can benefit from collective knowledge based on measurements by a fleet of many vehicles.

According to a fourth aspect of the disclosure, a server node is provided which comprises the computer system of the third aspect. The fourth aspect of the disclosure may seek to provide improved vehicle control for a fleet of many vehicles. A technical benefit may include that the vehicles are enabled to operate in a safe and efficient manner.

According to a fifth aspect of the disclosure, a computer-implemented method is provided for prediction of road surface operating conditions of a vehicle. The method comprises receiving (by processing circuitry of a computer system) at least a portion of a shared operating conditions model from a remote statistics processor, receiving (by the processing circuitry) real-time sensor measurement data from sensors of the vehicle, determining (by the processing circuitry) a vehicle-specific operating conditions model based on the portion of the shared operating conditions model and the real-time sensor measurement data, and using (by the processing circuitry) the vehicle-specific operating conditions model to predict upcoming operating conditions for the vehicle. The fifth aspect of the disclosure may seek to provide information relating to road surface operating conditions of a vehicle. A technical benefit may include improved vehicle control. A technical benefit may include that the vehicle control can benefit from collective knowledge based on measurements by a fleet of many vehicles, as well as currently relevant measurements for the vehicle under consideration.

Optionally in some examples, including in at least one preferred example, the method may further comprise causing (by the processing circuitry) the sensor measurement data to be uploaded to the remote statistics processor. A technical benefit may include that the collective knowledge based on measurements by a fleet of many vehicles is continuously updated.

Optionally in some examples, including in at least one preferred example, the portion of the shared operating conditions model may be determined by a location of the vehicle and/or a time of reception of the portion of the shared operating conditions model. A technical benefit may include that only currently relevant part(s) of the shared operating conditions model need to be transferred to the vehicle.

Optionally in some examples, including in at least one preferred example, the vehicle-specific operating conditions model may provide respective certainty metrics for road surface operating condition type(s), and wherein the upcoming operating conditions for the vehicle are predicted by road surface operating condition type selection based on the certainty metrics. A technical benefit may include improved prediction accuracy compared to if a single road surface operating condition type was provided by the vehicle-specific operating conditions model as basis for the prediction. Alternatively or additionally, a technical benefit may include that the certainty metrics may be used to improve safety and reliability of vehicle control.

According to a sixth aspect of the disclosure, a computer-implemented method is provided for prediction of road surface operating conditions of a specific vehicle. The method comprises receiving (by processing circuitry of a computer system) respective sensor measurement data from a plurality of vehicles, determining (by the processing circuitry) a shared operating conditions model based on the measurement data, and causing (by the processing circuitry) provision of at least a portion of the shared operating conditions model to the specific vehicle. The sixth aspect of the disclosure may seek to provide information relating to road surface operating conditions of a one or more vehicle(s). A technical benefit may include improved vehicle control. A technical benefit may include that the vehicle control can benefit from collective knowledge based on measurements by a fleet of many vehicles.

Optionally in some examples, including in at least one preferred example, the portion of the shared operating conditions model may be determined by a location of the specific vehicle and/or a time of provision of the portion of the shared operating conditions model. A technical benefit may include that only currently relevant part(s) of the shared operating conditions model need to be transferred to the vehicle.

Optionally in some examples, including in at least one preferred example, the shared operating conditions model may provide respective certainty metrics for road surface operating condition type(s). A technical benefit may include improved prediction accuracy compared to if a single road surface operating condition type was provided by the shared operating conditions model as basis for the prediction. Alternatively or additionally, a technical benefit may include that the certainty metrics may be used to improve safety and reliability of vehicle control.

According to a seventh aspect of the disclosure, a computer program product is provided, which comprises program code for performing, when executed by the processing circuitry, the method of the fifth aspect or the sixth aspect. The seventh aspect of the disclosure may seek to convey program code for improving vehicle control. A technical benefit may include that new vehicles and/or legacy vehicles may be conveniently configured, by software installation/update, to provide information relating to road surface operating conditions of a vehicle. A technical benefit may include that new remote vehicle servers and/or legacy remote vehicle servers may be conveniently configured, by software installation/update, to provide information relating to road surface operating conditions of a vehicle.

According to an eighth aspect of the disclosure, a non-transitory computer-readable storage medium is provided. The non-transitory computer-readable storage medium comprises instructions, which when executed by the processing circuitry, cause the processing circuitry to perform the method of the fifth aspect or the sixth aspect. The eighth aspect of the disclosure may seek to convey program code for improving vehicle control. A technical benefit may include that new vehicles and/or legacy vehicles may be conveniently configured, by software installation/update, to provide information relating to road surface operating conditions of a vehicle. A technical benefit may include that new remote vehicle servers and/or legacy remote vehicle servers may be conveniently configured, by software installation/update, to provide information relating to road surface operating conditions of a vehicle.

Generally, it should be understood that providing/receiving at least a portion of a shared operating conditions model includes situations where only a part of the shared operating conditions model is provided/received, as well as situations where the shared operating conditions model is provided/received in full.

Also generally, time of provision/reception current time should be understood to include time interval(s) and or recurring time units (e.g., a specific season, a specific month, a specific time (interval) of the day, etc.).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic drawing illustrating a vehicle fleet with a shared operating conditions model and a vehicle-specific operating conditions model according to some examples.
**FIG. 2** is a schematic drawing illustrating a vehicle according to some examples.
**FIG. 3** is a flowchart illustrating first and second methods according to some examples.
**FIG. 4** is a schematic drawing illustrating principles of a shared operating conditions model according to some examples.
**FIG. 5** is a schematic drawing illustrating a sensor arrangement mounted in the vicinity of a wheel according to some examples.
**FIG. 6** is a schematic drawing illustrating an operating conditions determination system comprising a sensor arrangement and a computer system according to some examples.
**FIG. 7** is a flowchart illustrating a method according to some examples.
**FIG. 8** is a schematic block diagram illustrating actuation control according to some examples.
**FIG. 9** is a schematic block diagram illustrating vehicle motion management according to some examples.
**FIG. 10** is a schematic diagram illustrating a computer system for implementing examples disclosed herein, according to some examples.
**FIG. 11** is a schematic drawing illustrating a computer program product, in the form of a non-transitory computer-readable storage medium, according to some examples.
**FIG. 12** is a schematic block diagram of a control unit according to some examples.

### DETAILED DESCRIPTION

The detailed description set forth below provides information and examples of the disclosed technology with sufficient detail to enable those skilled in the art to practice the disclosure.

As already mentioned, vehicle control may be improved if upcoming operating conditions (e.g., relating to road surface) can be accurately predicted. Approaches as exemplified herein aim to accomplish such accurate prediction by means of a general operating conditions model shared among a plurality of vehicles (a shared/common operating conditions model) and a vehicle-specific operating conditions model which is determined based on the shared operating conditions model.

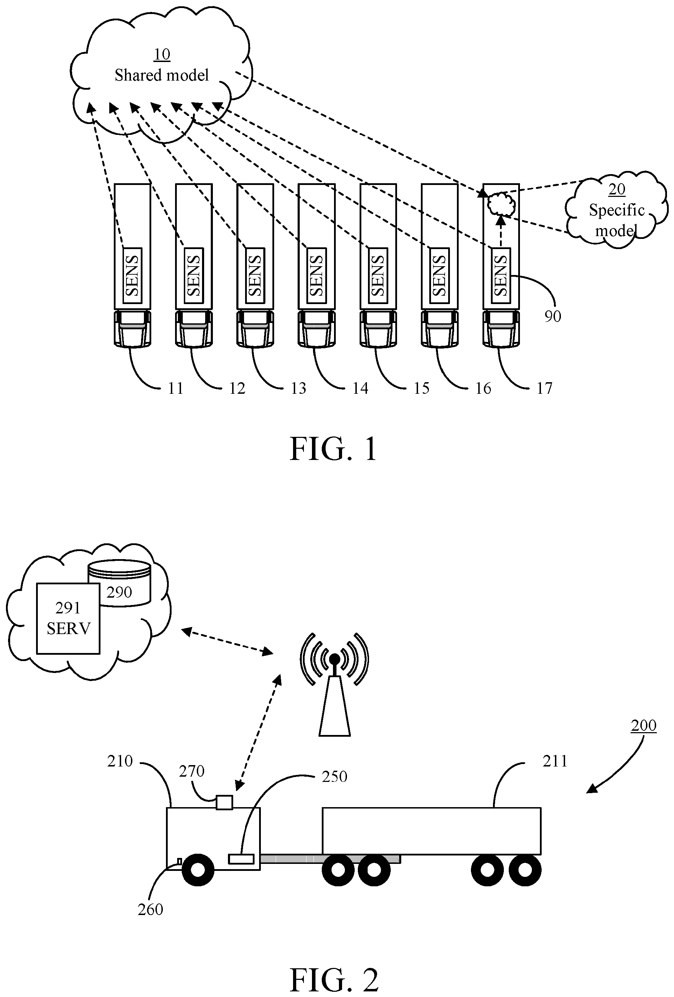

**FIG. 1** schematically illustrates a scenario where the approaches exemplified herein may be applicable. The example scenario of **FIG. 1** relates to a vehicle fleet that comprises a plurality of vehicles **11, 12, 13, 14, 15, 16, 17.** For example, all vehicles of the vehicle fleet may be associated with a same vehicle manufacturer and/or a same vehicle owner. Alternatively, the vehicles of the vehicle fleet may be associated with different manufacturers and/or different owners.

The vehicle fleet is associated with a shared operating conditions model 10. For example, the shared operating conditions model **10** may be stored and/or handled by a statistics processor (e.g., a cloud service function or some other central vehicle service function). One or more (e.g., all) of the vehicles **11, 12, 13, 14, 15, 16, 17** of the vehicle fleet are configured to upload sensor measurement data to the statistics processor for updating of the shared operating conditions model **10.** Furthermore, the shared operating conditions model **10** is configured to be (partially or fully) downloaded to one or more (e.g., all) of the vehicles **11, 12, 13, 14, 15, 16, 17** of the vehicle fleet. This is exemplified for the vehicle **17 in** **FIG. 1****.**

One or more (e.g., all) of the vehicles **11, 12, 13, 14, 15, 16, 17** of the vehicle fleet are configured to determine a vehicle-specific operating conditions model based on the shared operating conditions model as downloaded and based on real-time sensor measurement data for the relevant vehicle. This is exemplified for the vehicle **17 in** **FIG.** 1, where the vehicle-specific operating conditions model **20** is based on the shared operating conditions model **10** and on measurement data from sensors **90** of the vehicle **17.**

A computer system for prediction of road surface operating conditions may be provided by a statistics processor (e.g., implemented by a server or a system of servers), wherein the computer system comprises processing circuitry configured to receive respective sensor measurement data from a plurality of vehicles **11, 12, 13, 14, 15, 16, 17** and determine a shared operating conditions model **10** based on the measurement data. The processing circuitry may be further configured to cause provision of (at least a portion of) the shared operating conditions model **10** to one or more specific vehicle(s) **17.**

A vehicle **17** may comprise a computer system for prediction of road surface operating conditions of the vehicle, wherein the computer system comprises processing circuitry configured to receive (at least a portion of) a shared operating conditions model **10** from a remote statistics processor. The processing circuitry may be further configured to receive real-time sensor measurement data from sensors **90** of the vehicle **17,** and determine a vehicle-specific operating conditions model **20** based on (the portion of) the shared operating conditions model and the real-time sensor measurement data. The processing circuitry may be further configured to use the vehicle-specific operating conditions model to predict upcoming operating conditions for the vehicle, and/or cause the sensor measurement data to be uploaded to the remote statistics processor for updating of the shared operating conditions model **10.**

**FIG. 2** schematically illustrates an example vehicle **200** for cargo transport where the techniques disclosed herein can be advantageously applied. The vehicle **200** comprises a truck/tractor/towing unit **210** configured to tow one or more trailer unit(s) **211** in a known manner.

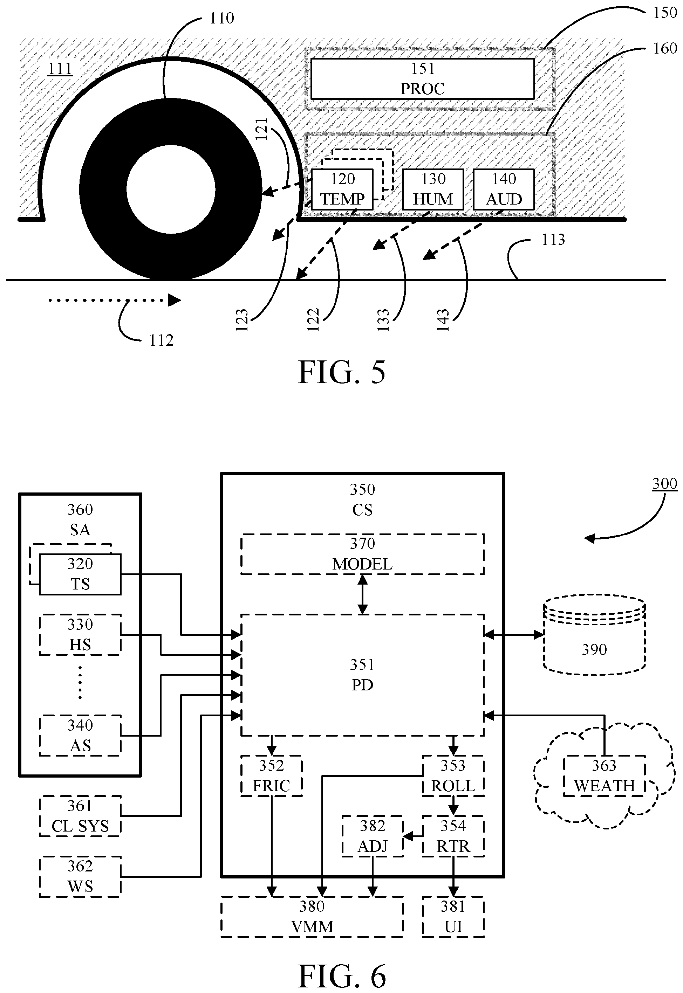

The tractor unit **210** and/or any of the trailer unit(s) **211** may comprise one or more sensor(s) **260;** e.g., a sensor arrangement suitable for determining upcoming operating conditions of a wheel. For example, the sensor arrangement may correspond to the sensor arrangement **160** of **FIG. 5****,** which is described later herein.

Further, the tractor unit **210** and/or any of the trailer unit(s) **211** may comprise a vehicle control unit (VCU) **250** configured to perform various vehicle (unit) control functions, such as vehicle motion management (VMM), based on a vehicle-specific operating conditions model. For example, the VCU **250** may comprise the processing circuitry **151** of **FIG. 5****,** which is described later herein.

In some examples, the VCU **250** may be further configured to upload and/or download information to/from a wheel operating conditions database **290** comprising a shared operating conditions model. The uploading/downloading may be implemented in any suitable way (e.g., via wireless communication techniques). To this end, the tractor unit **210** and/or any of the trailer unit(s) **211** may comprise a transceiver **270** for uploading/downloading in relation to the database **290.**

The wheel operating conditions database **290** may be implemented in any suitable way (using, e.g., a cloud service, general-purpose storage, dedicated storage, etc.). In some examples, the wheel operating conditions database **290** is comprised in, or otherwise accessible via, a server **291** implementing a remote statistics processor.

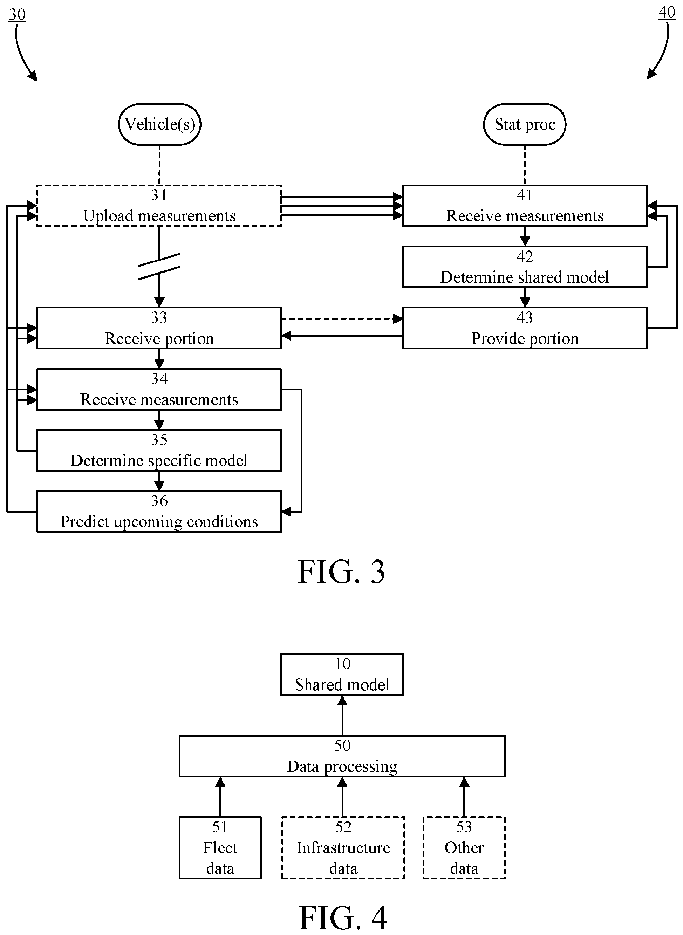

**FIG. 3** illustrates a first (computer-implemented) method **30** and a second (computer-implemented) method **40** according to some examples, for prediction of road surface operating conditions for vehicle(s). The first method **30** is performed by processing circuitry comprised in each of one or more vehicle(s) (compare with vehicles **11, 12, 13, 14, 15, 16, 17** of **FIG. 1** and the VCU **250** of the vehicle **200** of **FIG. 2****).** The second method **40** is performed by processing circuitry comprised in a remote statistics processor (compare with the server **291** of **FIG. 2****).**

The second method **40** comprises receiving respective sensor measurement data from a plurality of vehicles (e.g., a vehicle fleet), as illustrated by **41.** To this end, the first method **30** may, optionally, comprise uploading sensor measurement data, as illustrated by **31.** It should be noted that not all vehicles need to be configured to upload measurement data. In some examples, all vehicles are configured to upload measurement data. In some examples, only some vehicles are configured to upload measurement data, while those that are not can still benefit from using the shared operating conditions model. The sensor measurement data may be received from the vehicle(s) continuously (e.g., sent by frequent reporting by the vehicles as the measurements are performed), at some pre-determined reporting times, or on request from the remote statistics processor. It should be noted that a vehicle configured to upload measurement data need not upload all measurement data that it collects. It should also be noted that - as an alternative, or in addition to, the uploading and reception of measurement data in **31** and **41 -** the vehicle(s) can upload their vehicle-specific operating conditions model (or a portion of it) to the remote statistic processor for adaptation of the shared operating conditions model.

The second method **40** further comprises determining a shared operating conditions model (compare with **10** of **FIG. 1****)** based on the received measurement data, as illustrated by **42.**

The second method **40** also comprises providing at least a portion of the shared operating conditions model to each of one or more vehicle(s), as illustrated by **43.** In some examples, the shared operating conditions model is provided in full to each of one or more vehicle(s). In some examples, only a portion (part) of the shared operating conditions model is provided to a vehicle; where the provided portion may be based on vehicle-specific conditions (e.g., location of the vehicle and/or current time). The first method **30** comprises receiving (the portion of) the shared operating conditions model from the remote statistics processor, as illustrated by **33.** The shared operating conditions model may be provided to the vehicle(s) continuously (e.g., as soon as there is an update to the shared operating conditions model), at some pre-determined model sharing times (e.g., periodically), or on request from the vehicle(s). In some examples, the shared operating conditions model may be provided to a vehicle only when the vehicle has a high capacity connection for downloading (e.g., wired connection or high capacity wireless connection).

In scenarios where only a portion of the shared operating conditions model is provided to a vehicle, the portion can be selected in any suitable way. For example, a request from the vehicle may indicate a desired portion of the shared operating conditions model. Alternatively or additionally, the portion of the shared operating conditions model may be determined by a location of the specific vehicle and/or a time of provision of the portion of the shared operating conditions model. Thus, the vehicle can receive only particulars of the shared operating conditions model which are relevant for its current and upcoming situation. This has the potential of reducing the communication resources needed in the transfer of the shared operating conditions model from the remote statistics processor to the vehicle, and/or reducing the storing resources needed for keeping the shared operating conditions model in the vehicle. Typically, the scenarios where only a portion of the shared operating conditions model is provided may be realized by developing distinct model iterations tailored to potential vehicle-specific conditions (e.g., location, time, etc.), wherein the collection of all distinct model iterations may be seen as the shared operating conditions model and each distinct model iteration may be seen as a portion of the shared operating conditions model.

The first method 30 also comprises receiving real-time sensor measurement data from sensors of the vehicle, as illustrated by 34. This measurement data may, or may not, also be uploaded to the remote statistics processor (compare with 31) at a later stage.

The first method 30 further comprises determining a vehicle-specific operating conditions model (compare with **20** of **FIG. 1****)** based on the portion of the shared operating conditions model and the real-time sensor measurement data, as illustrated by **35.**

The first method **30** also comprises using the vehicle-specific operating conditions model to predict upcoming operating conditions for the vehicle, as illustrated by **36.** The predicted upcoming operating conditions for the vehicle may be used in any suitable way (e.g., in a vehicle motion management, VMM, function). For example, the predicted upcoming operating conditions may be used to control the vehicle with the aim to fulfill one or more optimization condition(s) (e.g., reduce/minimize tire wear, reduce/minimize rolling resistance, increase/maximize vehicle range before refueling/recharging, reduce/minimize probability of grip loss, reduce/minimize deviation from a target for global forces, etc.). Alternatively or additionally, the predicted upcoming operating conditions may be used as constraints in a control allocation problem used for control of the vehicle.

As illustrated in **FIG. 3****,** the first method **30** may return to any of **31, 33, 34** after execution of **35** or **36,** and the second method **40** may return to **41** after execution of **42** or **43.** It should also be noted that it is not necessary that all measurements received in **34** are used for determining the vehicle-specific operating conditions model in **35,** as illustrated by the alternative path from **34** to **36.**

**FIG. 4** schematically illustrates principles of a shared operating conditions model **10** according to some examples (compare with **10** of **FIG. 1****).** The shared operating conditions model **10** of **FIG. 4** is determined based on measurement data provided by a vehicle fleet, as illustrated by **51** (compare with **41, 42** of **FIG. 3****).** Optionally, the shared operating conditions model **10** of **FIG. 4** may be further based on infrastructure data and/or other data, as illustrated by **52** and **53.** The data to be used is jointly processed to provide the shared operating conditions model **10,** as illustrated by **50.** Examples of infrastructure data include information regarding road surface material (asphalt, gravel, grass, soil, clay, sand, etc.). Examples of other data include information regarding weather (current weather and/or weather statistics).

Generally, the sensor measurement data from sensors of the vehicle(s) (i.e., the sensor measurement data that is uploaded to the remote statistics processor for determination of the shared operating conditions model and/or the sensor measurement data that is used for determining the vehicle-specific operating conditions model) may comprise any suitable measurement data from any suitable sensor(s). Typical examples of sensors include visual sensor(s) (e.g., camera(s)), temperature sensor(s), humidity sensor(s), audio sensor(s), radar sensor(s), lidar sensor(s), inertial measurement unit(s) (IMU(s)), wheel speed sensor(s), etc.

In a particularly beneficial example, the sensor measurement data includes image data captured by one or more cameras combined with one or more other type(s) of sensor data (e.g., as collected by the sensor arrangement of **FIG. 5** which will be described later herein). Since the approaches exemplified herein aim to predict the operating conditions of the road surface ahead, some forecasting capability of the conditions is needed and any combination of sensory with includes image data of the road surface to be travelled by the vehicle is particularly suitable for these purposes.

Also generally, the road surface operating conditions may comprise any suitable parameters. Typical examples of parameters that describe the road surface operating conditions include friction, bearing of the road surface, solidity, surface material (asphalt, gravel, grass, soil, clay, sand, etc.), presence of foreign material (water, oil, snow, etc.), a dependency between wheel slip and longitudinal force, etc. Once predicted (possibly per wheel or side of the vehicle), such parameter(s) may be used to control the vehicle with the aim to fulfill one or more optimization condition(s) according to any suitable approach. For example, a VMM function can use will use the dependency between wheel slip and longitudinal force to set a slip limit depending on the surface conditions (e.g., in order to maximize grip, etc.).

Generally, a road surface operating condition type (or class) may be defined using any one or more suitable parameters. Example classes may be defined by a single parameter (e.g., classes: asphalt, gravel, grass, soil, clay, sand, water, snow, ice, etc.) or by any suitable combination of parameters (e.g., classes: dry asphalt, wet asphalt, oily asphalt, dry gravel, wet gravel, etc.).

**In** some examples, the shared operating conditions model and/or the vehicle-specific operating conditions model provides respective certainty metrics for road surface operating condition type(s) (e.g., 80% probability of asphalt with ±5% (un)certainty). Then, the upcoming operating conditions for the vehicle may be predicted by selecting a road surface operating condition type based on the certainty metrics.

Generally, the determination of the shared operating conditions model based on the measurement data may be accomplished using any suitable approach. For example, machine learning (possibly trained on data collected in scenarios with known road surface operating conditions) may be employed to construct the model from the measurement data. **In** some examples, the shared operating conditions model may be trained on a large dataset (e.g., acquired from a fleet) using self-supervised learning.

Self-supervised learning is typically implemented such that the model learns from the data itself without explicit labels. It leverages auxiliary tasks (e.g., predicting missing parts of an input) to create useful representations. Self-supervised learning is particularly effective when labeled data is scarce. For self-supervised learning, objectives like contrastive loss, predictive coding, or auto-encoder reconstruction loss are commonly used.

If the data distribution in the fleet changes significantly over time (e.g., due to new scenarios, changed user behavior, environmental shifts, etc.), retraining may become preferable. Regular monitoring of data drift (e.g., based on the uploaded measurement data) can trigger retraining when needed. Alternatively or additionally, retraining may be triggered according to some predefined schedule. Incremental updates allow the model to learn from new data without starting from scratch.

Both training and retraining may be seen as included in the determination of the shared operating conditions model.

The shared operating conditions model may be realized using any one of various suitable forms (e.g., deep neural networks, transformer architecture, etc.). The shared operating conditions model can be a generative model, but it can also take another form (e.g., a discriminative model). For example, the shared operating conditions model can be a Bayesian model.

A purpose of the shared operating conditions model is to capture general knowledge regarding operating conditions and features that can be useful across various tasks. The individual vehicle(s) can then fine-tune the last couple of layers of the shared operating conditions model using local sensory inputs and transfer learning to acquire the vehicle-specific operating conditions model.

Generally, the determination of the vehicle-specific operating conditions model based on the shared operating conditions model and the real-time sensor measurement data may be accomplished using any suitable approach. For example, machine learning may be employed to refine the shared model based on the real-time sensor measurement data.

Contextual adaptation may be employed to determine the vehicle-specific operating conditions model locally in a vehicle. The shared operating conditions model (or a portion of it) is typically deployed in an individual vehicle initially, and is adapted such that the vehicle comes to host a vehicle-specific operating conditions model - tailored to its unique context. The localized (vehicle-specific) models can act as specialized interpreters; extracting meaningful insights from local sensory data.

The vehicle-specific operating conditions model may utilize variational autoencoder (VAE) principles, which facilitate efficient representation in a compact latent space. The encoder network processes raw sensor data (such as camera images, LiDAR scans, etc.) to compress it into a concise form. The decoder network then reconstructs the original data from this latent representation.

The vehicle-specific operating conditions model may utilize joint semantic segmentation and friction estimation. Building on the semantic understanding provided by the shared operating conditions model, the vehicle-specific operating conditions model may perform two tasks: semantic segmentation (wherein a detailed map is generated that identify road surface types and/or conditions) and friction estimation (wherein local friction coefficients are estimated).

Regarding labeling in relation to the model determination, two sources may contribute to training labels according to some examples. A first source is real-world vehicle behavior (vehicle dynamic responses, e.g., wheel slip, lateral acceleration, etc.), which can provide the ground truth for friction estimation. A second source is pseudo-labels for semantic segmentation, which may be generated by the shared operating conditions model and which may evolve iteratively during training.

The vehicle-specific operating conditions model may aim to minimize a composite loss function comprising segmentation loss (which aligns predicted segmentation masks with pseudo-labels) and friction estimation loss (which compares predicted friction coefficients with the ground truth).

By incorporating principles from generalized evidence lower bound (ELBO) with constrained optimization (GECO), a customized objective function balances robust latent space representation and accurate segmentation and friction results. This smoothness may enhance the ability of the model to handle ambiguous or noisy inputs while maintaining interpretability. The customized objective function may include parameters corresponding to Lagrange multipliers of a constrained optimization problem, that may be used as tuning parameters to provide better performance of the model in specific vehicles.

The vehicle-specific operating conditions model can, for example, be a Bayesian model.

Typically, the shared operating conditions model and the vehicle-specific operating conditions model have the same (or similar) architecture.

According to some examples, the approaches suggested herein provides for dynamic road friction prediction using adaptive multi-source data fusion and online learning. The friction coefficient between the tires and the road surface is an important parameter that influences vehicle dynamics, the stopping distance, etc.

For example, the approaches suggested herein may be applied to the field of advanced driver assistance systems (ADAS) and/or autonomous vehicle technology. Specifically, approaches are proposed for predicting the tire-road friction coefficient for improved vehicle control and safety functionality. The proposed friction estimation methodology can be integrated into the perception and sensor processing pipeline of self-driving vehicles. For example, the friction estimation may be used to calculate aggregated capabilities (e.g., on vehicle level, or on vehicle unit level), which may be provided to some higher level tactical controller (e.g., ADAS). By providing knowledge of the upcoming friction conditions to the vehicle control systems, functions such as emergency braking, traction control, and steering adjustments can be optimized to the available grip from the road. This allows the vehicle to precisely operate at the limits of handling on varying surfaces. Alternatively or additionally, the friction prediction can be used to adjust ADAS system behavior ahead of time in low-grip conditions. For example, forward collision warning distances can be increased when detecting an icy patch of road ahead.

According to some examples, a target of the proposed approaches is to enhance road safety and optimize vehicle control by addressing the challenge of accurately predicting road friction conditions. An example underlying problem to be solved revolves around the limitations of existing systems that rely solely on real-time estimation, leading to insufficient accuracy and adaptability in various driving scenarios. Improvement of road safety and vehicle performance may be achieved by combining the strengths of a cloud-based general model with individual vehicle adaptability through online learning. A possible goal is to overcome the limitations of existing friction estimation systems, providing accurate and adaptive predictions across a spectrum of driving scenarios.

**In** some typical examples, data collection is achieved by sensors on each vehicle capturing real-time data (including, e.g., images, vehicle dynamics, environmental conditions, etc.), and the collected data is transmitted to a centralized cloud server (e.g., using secure transmission). A cloud-based model is trained on the aggregated dataset from the fleet, wherein the training involves learning complex patterns and relationships within the diverse data. The trained general model may be pushed to each connected vehicle for deployment, where online learning algorithms may adapt the general model to the specific operating conditions of each vehicle, and continuous fine-tuning may enhance the accuracy of the model for individual scenarios. Typically, the model use data fusion (wherein the model integrates data from various sources relating to, e.g., image and vehicle dynamics) and employs semantic segmentation (wherein different road surface types are identified). The model can estimate friction coefficients based on the identified road surfaces, and uncertainty quantification may provide a confidence level for each prediction. Thus, real-time, vehicle-specific friction predictions may be provided, which enables optimization of vehicle control and safety.

**In** some typical examples, there is integration of continuous fleet data collection, cloud-based machine learning, online learning for adaptation, multi-source data fusion, semantic segmentation, friction estimation with uncertainty quantification, and the use of low-cost sensors. This comprehensive solution aims to significantly improve the accuracy and adaptability of road friction predictions, contributing to enhanced vehicle control and safety across diverse driving scenarios.

**In** some examples, the ground truth used for the shared model may be based on dataset construction wherein one or more expert(s) are responsible for building and maintaining the dataset (e.g., comprising information from various driving scenarios, road types, environmental conditions, etc.), including labeling to establish the ground truth for friction estimation. For example, semantic segmentation labels may be derived from the dataset by associating image pixels with respective road surface type(s) (e.g., asphalt, gravel, grass, soil, clay, sand, ice, water, etc.).

**In** some examples, the ground truth used for the vehicle-specific model may be calculated using collected real-time vehicle signals (including, e.g., dynamic parameters such as wheel speed, acceleration, wheel torque, driveline torque, measured force(s), and other relevant factors that directly reflect the interaction between the vehicle and the road surface). Semantic segmentation labels may be provided using a pseudo-label generating model. Thus, the vehicle-specific model may be trained using the same (or a similar) type of dataset as the shared model, but without expert labeling. Instead, pseudo-labels may be dynamically generated in real-time based on learned patterns.

Some related background art on friction coefficient estimation may be found in "Estimating friction coefficient using generative modelling" by M. Otoofi, et al., 2023 IEEE International Conference on Mechatronics (ICM), March 2023.

As already mentioned, the one or more sensor(s) of the vehicle may comprise at least one visual sensor and a sensor arrangement for determining upcoming operating conditions of a wheel of the vehicle. Some further exemplification of the sensor arrangement and features related thereto is provided in the form of some additional aspects and with reference to **FIGs. 5-7****.** Generally, it should be noted that the determination of upcoming operating conditions of a wheel of a vehicle described in relation to the sensor arrangement may be seen as comprising prediction of road surface operating conditions for a vehicle.

According to a first additional aspect of the disclosure, a sensor arrangement is provided for determining upcoming operating conditions of a wheel of a vehicle. The sensor arrangement comprises at least one temperature sensor. The at least one temperature sensor is configured to be mounted in vicinity of the wheel. The at least one temperature sensor is configured to measure a ground surface temperature of a portion of the ground surface to be traveled by the wheel, and/or a tire temperature of the outer surface of a tire of the wheel. The first additional aspect of the disclosure may seek to improve the determination of operating conditions of a vehicle by providing knowledge regarding upcoming operating conditions of a wheel of a vehicle. A technical benefit may include improved vehicle control due to the knowledge regarding upcoming operating conditions.

Optionally in some examples, including in at least one preferred example, the at least one temperature sensor may be further configured to measure an ambient temperature above the portion of the ground surface to be traveled by the wheel. A technical benefit may include that the determination of operating conditions of the vehicle - and thereby the vehicle control - may be further improved by increased knowledge regarding upcoming operating conditions of the wheel of the vehicle.

Optionally in some examples, including in at least one preferred example, the sensor arrangement may further comprise a humidity sensor configured to be mounted in vicinity of the wheel, and to measure an ambient humidity above the portion of the ground surface to be traveled by the wheel. A technical benefit may include that the determination of operating conditions of the vehicle - and thereby the vehicle control - may be further improved by increased knowledge regarding upcoming operating conditions of the wheel of the vehicle.

Optionally in some examples, including in at least one preferred example, the sensor arrangement may further comprise an audio sensor configured to be mounted in vicinity of the wheel, and to measure sound above the portion of the ground surface to be traveled by the wheel. A technical benefit may include that the determination of operating conditions of the vehicle - and thereby the vehicle control - may be further improved by increased knowledge regarding upcoming operating conditions of the wheel of the vehicle.

Optionally in some examples, including in at least one preferred example, each sensor of the sensor arrangement may be further configured to provide measurement data to processing circuitry. A technical benefit may include that the processing circuitry has improved information available to determine upcoming operating condition parameter values for vehicle control.

Optionally in some examples, including in at least one preferred example, one or more of: the at least one temperature sensor, the humidity sensor, and the audio sensor may be configured for mounting in front of a foremost axle of the vehicle. A technical benefit may include that the measurement data is un-disturbed by events relating to other wheels of the vehicle.

According to a second additional aspect of the disclosure, a computer system comprising processing circuitry is provided. The processing circuitry is configured to receive measurement data from a sensor arrangement according to the first additional aspect. The processing circuitry is also configured to predict an upcoming rolling resistance and/or an upcoming tire-ground friction based on the measurement data. The second additional aspect of the disclosure may seek to improve the accuracy of operating condition parameter value prediction for a vehicle. A technical benefit may include improved vehicle control due to the improved accuracy.

Optionally in some examples, including in at least one preferred example, the processing circuitry may be configured to predict the upcoming rolling resistance and/or the upcoming tire-ground friction further based on a wheel behavior model. A technical benefit may include that the prediction method is matched to the vehicle control (e.g., by using corresponding models for prediction and vehicle control). Alternatively or additionally, a technical benefit may include flexible prediction (e.g., by allowing use of different models).

Optionally in some examples, including in at least one preferred example, the processing circuitry may be configured to update the wheel behavior model based on the received measurement data. A technical benefit may include that the model can be dynamically adapted (e.g., improved) in relation to the vehicle behavior for the measured operating conditions and/or the determined parameter values.

Optionally in some examples, including in at least one preferred example, the processing circuitry may be configured to predict the upcoming rolling resistance and/or the upcoming tire-ground friction further based on one or more of: Tire Pressure Monitoring System (TPMS) data (indicative of - for example - one or more of: an inner temperature of the tire, a tire pressure, local acceleration, a tire contact patch), climate system data, wiper sensor data, tire manufacturer data, and remote source weather data associated with current location of the vehicle and/or with anticipated route of the vehicle. A technical benefit may include further improvement of the accuracy of operating condition parameter value prediction for a vehicle.

Optionally in some examples, including in at least one preferred example, the processing circuitry may be configured to upload the measurement data and/or corresponding metadata to a wheel operating conditions database which is accessible by one or more other vehicles. A technical benefit may include that other vehicle(s) can improve their knowledge of operating conditions along an upcoming (anticipated) route. For example, the other vehicle(s) can obtain knowledge of operating conditions at their location without making measurements of their own, and/or can improve the accuracy of predicted parameter value(s) by combining their own measurements with information obtained from the wheel operating conditions database. Alternatively or additionally, the other vehicle(s) can obtain specific knowledge of operating conditions along the upcoming route ahead of their location (i.e., before it is possible to perform measurements of their own).

Optionally in some examples, including in at least one preferred example, the processing circuitry may be further configured to download further wheel operating conditions data from the wheel operating conditions database, wherein the further wheel operating conditions data is associated with one or more of: current location of the vehicle, anticipated route of the vehicle, and tire type. The processing circuitry may be configured to predict the upcoming rolling resistance and/or the upcoming tire-ground friction further based on the downloaded further wheel operating conditions data. A technical benefit may include that the knowledge of operating conditions along an upcoming (anticipated) route may be improved. For example, the accuracy of predicted parameter value(s) at the location of the vehicle can be improved by combining the measurements performed by the vehicle with information obtained from the wheel operating conditions database. Alternatively or additionally, the vehicle can obtain specific knowledge of operating conditions along the upcoming route ahead of its location (i.e., before it is possible to perform measurements by the vehicle).

Optionally in some examples, including in at least one preferred example, the processing circuitry may be further configured to dynamically determine a remaining travelling range until energy replenishment of the vehicle is needed based on the predicted upcoming rolling resistance. A technical benefit may include that estimation accuracy for the remaining travelling range is improved.

Optionally in some examples, including in at least one preferred example, the processing circuitry is further configured to dynamically adjust (382) vehicle operation to reduce energy consumption responsive to the determined remaining travelling range being shorter than a remaining anticipated route of the vehicle. A technical benefit may include that a probability to reach the end of an anticipated route (e.g., an energy replenishment location) is increased.

According to a third additional aspect of the disclosure, an operating conditions determination system is provided, which comprises the sensor arrangement of the first additional aspect and the computer system of the second additional aspect. The third additional aspect of the disclosure may seek to provide a collection of interrelated devices suitable for improving the accuracy of operating condition parameter value prediction for a vehicle. A technical benefit may include improved vehicle control due to the improved accuracy.

According to a fourth additional aspect of the disclosure, a vehicle is provided comprising the sensor arrangement of the first additional aspect, or the operating conditions determination system of the third additional aspect. The fourth additional aspect of the disclosure may seek to provide a vehicle with improved vehicle control.

According to a sixth additional aspect of the disclosure, a computer-implemented method is provided. The method comprises receiving, by processing circuitry of a computer system, measurement data from a sensor arrangement according to the first additional aspect, and predicting, by the processing circuitry, an upcoming rolling resistance and/or an upcoming tire-ground friction based on the measurement data. The sixth additional aspect of the disclosure may seek to improve the accuracy of operating condition parameter value prediction for a vehicle. A technical benefit may include improved vehicle control due to the improved accuracy.

According to a seventh additional aspect of the disclosure, a computer program product is provided, which comprises program code for performing, when executed by the processing circuitry, the method of the sixth additional aspect. The seventh additional aspect of the disclosure may seek to convey program code for improving vehicle control. A technical benefit may include that new vehicles and/or legacy vehicles may be conveniently configured, by software installation/update, to predict an upcoming rolling resistance and/or an upcoming tire-ground friction based on measurement data providing knowledge regarding upcoming operating conditions of a wheel of the vehicle.

According to an eighth additional aspect of the disclosure, a non-transitory computer-readable storage medium is provided. The non-transitory computer-readable storage medium comprises instructions, which when executed by the processing circuitry, cause the processing circuitry to perform the method the sixth additional aspect. The eighth additional aspect of the disclosure may seek to convey program code for improving vehicle control. A technical benefit may include that new vehicles and/or legacy vehicles may be conveniently configured, by software installation/update, to predict an upcoming rolling resistance and/or an upcoming tire-ground friction based on measurement data providing knowledge regarding upcoming operating conditions of a wheel of the vehicle.

As already mentioned, vehicle control may be improved if operating condition parameter values, such as rolling resistance and/or tire-road friction, are known, or at least measured or estimated with some suitable accuracy. For example, with a more accurate estimation of tire-road friction, force allocation in a vehicle management approach may be improved in the sense that the probability of allocating forces that cannot be fulfilled by the actuators is decreased, and/or in that the probability of unnecessarily restricting the forces is decreased.

Generally, when operating conditions of a wheel are referred to herein, it is meant to encompass conditions that influence the motion of the vehicle.

Also generally, the exemplification of the following description assumes that the wheel is traveling on a road, while the suggested approaches are more generally applicable on any type of ground (i.e., also off-road).

**In** some example scenarios comprising steering on dry road conditions, the vehicle typically has no risk of understeering, and the predicted maximum speed is typically not limited in the predicted curvature. However, if the friction is predicted to drop (say from a friction coefficient value of 1.0 to 0.5, or even 0.3) then the speed limit can be adjusted accordingly (e.g., by limiting the global forces values that are available for allocation in a vehicle motion management function).

**In** some example scenarios comprising water on a cold road surface, the rolling resistance may typically be higher than anticipated without application of the proposed approaches. Consequently, the remaining travelling range until energy replenishment may be overestimated. When more adequate information regarding the remaining travelling range is available, problems associated with energy shortage may be solved (or at least mitigated) by range extending actions (e.g., reduction of vehicle speed, reduction of climate system energy consumption, etc.) and/or by re-scheduling the upcoming stop for energy replenishment.

A problem with existing approaches for vehicle control is that there is no reliable information regarding upcoming (i.e., future) parameter values. Thereby, it becomes cumbersome to plan vehicle control actions adequately ahead of time.

The approaches herein suggest solutions for determination of upcoming operating conditions. A sensor arrangement is provided, which is suitable for mounting in the vicinity of (e.g., in front of) a wheel of a vehicle. The sensor arrangement is configured to perform measurements relating to the upcoming situation for the wheel (e.g., various data for temperatures, humidity, and sound). The measurement data is preferably provided to processing circuitry configured to predict upcoming rolling resistance and/or upcoming tire-road friction based on the measurement data. Thereby, the information regarding upcoming parameter values becomes more accurate and reliable. The predicted upcoming parameter values may be used for vehicle control, which may be consequently improved. Alternatively or additionally, the predicted upcoming parameter values may be used for other purposes.

Generally, the term "upcoming" may be interpreted as something to occur in the near future (e.g., within a time window with limited duration and starting at the current moment in time, or very slightly after the current moment in time). For example, the time window may start immediately after the current moment in time or slightly thereafter (e.g., in the interval of 0 to 5 seconds after the current moment in time). Alternatively or additionally, the duration of the time window may be in an interval of 1 to 10 seconds. More generally, the term "upcoming" may refer to any suitable time (or time period) in the future. For example, a time window starting at, or relatively soon after, the current moment in time and/or with a relatively short duration is typically suitable for capturing relatively sudden changes in operating conditions (e.g., due to a water puddle or a snow patch on the road surface). Alternatively or additionally, a time window starting relatively later and/or with a relatively long duration is typically suitable for capturing relatively slow variations in operating conditions (e.g., due to thermal dynamics of the tire).

Also generally, the term "vicinity" may be interpreted as a location in, or on, the vehicle, which is within a certain distance from some suitable reference point of the wheel. Alternatively or additionally, the term "vicinity" may be interpreted as a location from which it is possible to obtain the measurements that the corresponding sensor is configured to perform.

For example, a temperature sensor configured to measure a road surface temperature of a portion of the road surface to be traveled by the wheel may be preferably mounted such that it has (during traveling of the vehicle) an infrared spectrum line-of-sight to a ground surface area just in front of the wheel (e.g., within 5-50 cm in front of the lowermost part of the wheel, where it touches the ground surface). Generally, the portion of the road surface to be traveled by the wheel may comprise a road surface portion that is yet (largely) unaffected/undisturbed by the wheel. Also generally, the portion of the road surface to be traveled by the wheel may comprise a road surface portion in front of the wheel (using the default movement direction of the vehicle as reference for "in front of") or a road surface portion behind the wheel when the vehicle is reversing (using the default movement direction of the vehicle as reference for "behind").

Alternatively or additionally, a temperature sensor configured to measure a tire temperature of the outer surface of a tire of the wheel may be preferably mounted such that it has (during traveling of the vehicle) an infrared spectrum line-of-sight to a suitable outer surface area of the wheel (e.g., a front-most surface area of the wheel, or an area of the wheel between the front-most surface area of the wheel and the lowermost part of the wheel). Generally, the outer surface area of the wheel may comprise a tire surface portion that is yet (largely) unaffected/undisturbed by the upcoming contact between the wheel and the road surface.

Yet alternatively or additionally, a temperature sensor configured to measure an ambient temperature above the portion of the road surface to be traveled by the wheel may be preferably mounted such that it has (during traveling of the vehicle) an infrared spectrum line-of-sight to a suitable portion of the surroundings of the wheel, such as a space just above the ground surface area and just in front of the wheel (e.g., within 5-50 cm above the ground surface, and within 5-50 cm in front of the lowermost part of the wheel).

Yet alternatively or additionally, a humidity sensor configured to measure an ambient humidity above the portion of the road surface to be traveled by the wheel may be preferably mounted such that it has direct access to a suitable portion of the surroundings of the wheel, such as a space just above the ground surface area and just in front of the wheel (e.g., within 5-50 cm above the ground surface, and within 5-50 cm in front of the lowermost part of the wheel), wherein direct access may be interpreted as a probing tool of the humidity sensor reaching the suitable portion of the surroundings of the wheel. More generally, the humidity sensor may be configured to measure an ambient humidity anywhere in a vicinity of the road surface to be traveled, or even anywhere in a vicinity of the vehicle. Typically, the vicinity of the road surface to be traveled, or the vicinity of the vehicle, may be any suitable location which is undisturbed by additional humidity sources (e.g., vehicle outlets of - for example - hot gas, splashing of tires, etc.).

Yet alternatively or additionally, an audio sensor configured to measure sound above the portion of the road surface to be traveled by the wheel may be preferably mounted such that it has (during traveling of the vehicle) an audio line-of-sight to a suitable portion of the surroundings of the wheel, such as a space just above the ground surface area and just in front of the wheel. More generally, the audio sensor may be configured to measure sound in a more general vicinity of the wheel (e.g., capturing splashing sounds caused by wet or snowy road surface).

It should be noted that a combination of an audio sensor and a humidity sensor may be particularly beneficial. Such a combination typically increases the reliability of detection of certain conditions (e.g., humid conditions such as rain, wet surface, snowy surface, etc.).

In some examples, mounting a sensor in vicinity of a wheel comprises mounting the sensor in front of the corresponding wheel axle, and/or in front of the wheel.

**FIG. 5** schematically illustrates a sensor arrangement **160** mounted in vicinity of (e.g., in front of) a wheel **110** of a vehicle **111** according to some examples. The wheel **110** has a traveling direction indicated by **112,** along a road surface indicated by **113.** The sensor arrangement **160** comprises at least one temperature sensor **120,** a humidity sensor **130** (optional), and an audio sensor **140** (optional).

As indicated by 121, the at least one temperature sensor 120 is configured to measure a tire temperature of the outer surface of the tire of the wheel 110. Furthermore, as indicated by 122, the at least one temperature sensor 120 is configured to measure a road surface temperature of a portion of the road surface 113 to be traveled by the wheel 110. In some examples, as indicated by 123, the at least one temperature sensor 120 is also configured to measure an ambient temperature above the portion of the road surface 113 to be traveled by the wheel 110.

The at least one temperature sensor 120 may comprise a single temperature sensor configured to perform all of the temperature measurements **121, 122,** and (optionally) 123. Alternatively, the at least one temperature sensor 120 may comprise two, three, or more temperature sensors, each configured to perform one, or some, of the temperature measurements **121, 122,** and (optionally) 123. For example, the at least one temperature sensor **120** may comprise a first temperature sensor configured to perform the temperature measurement **121,** a second temperature sensor configured to perform the temperature measurement **122,** and (optionally) a third temperature sensor configured to perform the temperature measurement **123.**

Each of the at least one temperature sensor(s) **120** may be implemented using any suitable sensor configured to measure temperature (e.g., an infra-red, IR, sensor).

As indicated by **133,** the humidity sensor **130** is configured to measure an ambient humidity above the portion of the road surface **113** to be traveled by the wheel **110.**

The humidity sensor **130** may be implemented using any suitable sensor configured to measure humidity (e.g., a capacitive humidity sensor, a thermal humidity sensor, or a resistive humidity sensor).

As indicated by **143,** the audio sensor **140** is configured to measure sound above the portion of the road surface **113** to be traveled by the wheel **110.**

The audio sensor **140** may be implemented using any suitable sensor configured to measure sound (e.g., a microphone).

By measuring conditions associated with an upcoming contact point between the tire and the road surface, the sensor arrangement **160** is suitable for determining upcoming operating conditions of the wheel **110.**

When the wheel **110** is mounted on a foremost wheel axle of the vehicle **111** (using the default movement direction of the vehicle as reference for "foremost"), and/or when one or more of the sensors **120, 130, 140** (e.g., the entire sensor arrangement **160)** is mounted in front of a foremost axle of the vehicle **111,** some particular benefits may follow. In such scenarios, the road surface **113** and its immediate surroundings are typically relatively undisturbed when the measurements are performed, which may yield more useful information. For example, road surface and ambient temperature measurements are not affected by recent traveling of other wheels (e.g., warming up by pressure and contact, cooling down by splashing of water, etc.). Alternatively or additionally, ambient humidity measurements are not affected by recent traveling of other wheels (e.g., increased humidity by splashing of water, etc.). Yet alternatively or additionally, sensors are not affected by debris stirred by recent traveling of other wheels.

**FIG. 5** also schematically illustrates a computer system **150** comprising processing circuitry **151.** Together, the computer system **150** and the sensor arrangement **160,** may be seen as an operating conditions determination system.

In **FIG. 5****,** the computer system **150** is illustrated as mounted close to the wheel **110,** and in direct association with the sensor arrangement **160.** However, it should be noted that the computer system **150** may be located at any suitable position in/on the vehicle **111.** In some examples, the computer system **150** is distributed over multiple locations in/on the vehicle **111.**

An operable connection between the sensor arrangement **160** and the computer system **150** may be implemented in any suitable way (e.g., via wired, or wireless, communication). Furthermore, the operable connection may be implemented as a direct connection between the sensor arrangement **160** and the computer system **150** (e.g., by the sensor arrangement comprising an interface unit - such as a tire-road surface sensor interface, TRS I/O - configured to receive the sensor data from each sensor and provide it to the computer system **150),** or may be implemented as a connection via one or more intermediate entities.

Each sensor of the sensor arrangement **160** is configured to provide measurement data to the processing circuitry **151** (e.g., by using the operable connection between the sensor arrangement **160** and the computer system **150).** The processing circuitry **151** is configured to receive the measurement data, and predict an upcoming rolling resistance and/or an upcoming tire-road friction based on the measurement data.

For example, a relatively high outer surface tire temperature **121** may cause the processing circuitry **151** to predict a relatively low upcoming rolling resistance and/or a relatively high upcoming tire-road friction.

Alternatively or additionally, a relatively high road surface temperature **122** may cause the processing circuitry **151** to predict a relatively low upcoming rolling resistance and/or a relatively high upcoming tire-road friction.

Yet alternatively or additionally, a relatively high ambient temperature **123** may cause the processing circuitry **151** to predict a relatively low upcoming rolling resistance and/or a relatively high upcoming tire-road friction.

Yet alternatively or additionally, a relatively high ambient humidity **133** may cause the processing circuitry **151** to predict a relatively low upcoming tire-road friction.

Yet alternatively or additionally, a sound **143** indicative of a relatively wet/snowy road surface may cause the processing circuitry **151** to predict a relatively high upcoming rolling resistance and/or a relatively low upcoming tire-road friction. The processing circuitry may be configured analyze the sound measurement data to detect whether it comprises sound patterns that are likely caused by wet/snowy conditions, or a relatively high sound level may be considered to indicate wet/snowy conditions.

**In** some examples, the processing circuitry **151** is configured to take also other information into account when predicting the upcoming rolling resistance and/or the upcoming tire-road friction.

For example, a Tire Pressure Monitoring System (TPMS) of the vehicle **111** may provide data (indicative of - for example - one or more of: an inner temperature of the tire, a tire pressure, local acceleration, a tire contact patch) to the processing circuitry **151,** and it may affect the prediction in a similar way as the outer surface tire temperature **121.** Meanwhile, it should be noted that the inner temperature of the tire typically changes more slowly than the outer surface tire temperature.

Alternatively or additionally, the TPMS may provide indications of thermal capacity and wear of the tire, and that data may affect the prediction (e.g., a relatively high thermal capacity may provide for a relatively slow response by the tire to external conditions).

Alternatively or additionally, a climate system of the vehicle **111** may provide data indicative of climate parameters (e.g., ambient temperature of the vehicle, ambient humidity of the vehicle, intensity or sun radiation, direction of sun radiation, etc.) to the processing circuitry **151,** and the climate parameters may affect the prediction in a similar way as the ambient temperature **123,** and/or the ambient humidity **133.** It should be noted that the parameter values from the climate system are typically different from the corresponding parameter values obtained in a vicinity of the wheel (which is why the approaches of measurements close to the wheel as described herein are beneficial), but the parameter values from the climate system may be used as supplements/enhancements of the corresponding parameter values obtained in a vicinity of the wheel. For example, a weighted average between parameter values from the climate system and the corresponding parameter values obtained in a vicinity of the wheel may be used to represent the parameter under consideration.

Yet alternatively or additionally, a wiper sensor of the vehicle **111** may provide data indicative of wet/snowy conditions to the processing circuitry **151,** and that data may affect the prediction in a similar way as the ambient humidity **133,** and/or the sound **143.**

Yet alternatively or additionally, the processing circuitry **151** may have access to tire manufacturer data (e.g., indicating thermal capacity and wear of the tire), and that data may affect the prediction as exemplified above.

Yet alternatively or additionally, the processing circuitry **151** may have access to remote source weather data (e.g., temperature, humidity, wet/snowy conditions) associated with current location of the vehicle and/or with anticipated route of the vehicle, and that data may affect the prediction in a similar way as the ambient temperature **123,** and/or the ambient humidity **133,** and/or the sound **143.** It should be noted that the parameter values from the remote source weather data are typically different from (and/or less detailed than) the corresponding parameter values obtained in a vicinity of the wheel (which is why the approaches of measurements close to the wheel as described herein are beneficial), but the parameter values from the remote source weather data may be used as supplements/enhancements of the corresponding parameter values obtained in a vicinity of the wheel. For example, a weighted average between parameter values from the remote source weather data and the corresponding parameter values obtained in a vicinity of the wheel may be used to represent the parameter under consideration.

According to some examples, a sensor arrangement as described herein may be used to measure road surface temperature of a portion of the road surface to be traveled by the wheel, tire temperature of the outer surface of a tire of the wheel, ambient temperature above the portion of the road surface to be traveled by the wheel, and/or ambient humidity above the portion of the road surface to be traveled by the wheel. This measurement data may be supplemented by information from TPMS. Then, measurements by an audio sensor may be used to confirm or reject findings by the humidity sensor (e.g., if the humidity sensor detects close to 100% humidity and the audio sensor detects splashing sounds, it can be assumed that the road surface is wet).

According to some examples, the predicted tire-road friction may indicate relatively high friction for relatively high measured temperature(s) and relatively low measured humidity, high-to-medium friction for relatively high measured temperature(s) and relatively high measured humidity, medium-to-low friction when water sounds are detected for relatively high measured temperature(s) and relatively high measured humidity, and low friction when water/snow sounds are detected for relatively low measured temperature(s) (e.g., close to zero degrees Celsius) and relatively high measured humidity.

According to some examples, the processing circuitry **151** may be configured to additionally perform one or more further tasks; as will be exemplified further below.

**FIG. 6** schematically illustrates an operating conditions determination system **300** comprising a sensor arrangement (SA) **360** and a computer system (CS) **350.** For example, the sensor arrangement **360** may correspond to the sensor arrangement **160** of **FIG. 5** and/or the sensor arrangement **260** of **FIG. 2****.** Alternatively or additionally, the computer system **350** may correspond to the computer system **150** of **FIG. 5** and/or may be comprised in the VCU **250** of **FIG. 2****.**

The sensor arrangement **360** is suitable for determining upcoming operating conditions of a wheel of a vehicle, and comprises at least one temperature sensor (TS) **320,** (optionally) a humidity sensor (HS) **330,** and (optionally) an audio sensor (AS) **340;** all configured to be mounted in vicinity of the wheel.

The temperature sensor **320** is configured to measure a tire temperature of the outer surface of a tire of the wheel, a road surface temperature of a portion of the road surface to be traveled by the wheel, and (optionally) an ambient temperature above the portion of the road surface to be traveled by the wheel. The humidity sensor **330** is configured to measure an ambient humidity above the portion of the road surface to be traveled by the wheel. The audio sensor **340** is configured to measure sound above the portion of the road surface to be traveled by the wheel.

Each sensor is configured to provide measurement data to processing circuitry of the computer system **350.** For example, the processing circuitry may comprise a predictor (PD) **351,** configured to receive the measurement data from the sensor(s) **320, 330, 340** of the sensor arrangement **360,** and predict an upcoming rolling resistance (ROLL) **353** and/or an upcoming tire-road friction (FRIC) **352** based on the measurement data.

In some examples, the processing circuitry of the computer system **350** (e.g., the predictor **351)** may be configured to assume that upcoming operating conditions are equivalent (or at least similar) to the currently performed measurements. Then, the currently performed measurements may be used to predict (e.g., via a wheel behavior model) the tire temperature going forward. The predicted tire temperature, along with an anticipated vehicle speed, can be used to determine an estimation of the upcoming rolling resistance. If water or snow is detected, the estimation of the upcoming rolling resistance may be adjusted accordingly.

**In** some examples, the predictor **351** may be configured to receive further information from one or more other sources than the sensor arrangement **360,** and to include such further information in the prediction of upcoming rolling resistance **353** and/or upcoming tire-road friction **352. In** **FIG. 6****,** the further information is exemplified by data from a climate system (CL SYS) **361,** data from a wiper sensor (WS) **362,** and weather data from a remote source (WEATH) **363.** It should be noted that any suitable further information from any suitable source may be used in the prediction; in addition to the measurement data from the sensor arrangement **360.**

The predicted upcoming rolling resistance **353** and/or upcoming tire-road friction **352** may be provided to a vehicle motion management function (VMM) **380,** which is configured to use the predicted values as suitable (e.g., according to known approaches for using rolling resistance and/or tire-road friction to allocate forces and generate actuator instructions).

Alternatively or additionally, the predicted upcoming rolling resistance **353** may be used to dynamically determine (estimate) a remaining travelling range (RTR) **354** until energy replenishment of the vehicle is needed based on the predicted upcoming rolling resistance. Generally, a relatively high rolling resistance may lead to relatively high energy consumption; thereby draining a fuel tank or a battery relatively fast. Thus, a default estimation of remaining travelling range based on the current level of fuel or battery load, may be decreased when the rolling resistance is relatively high; and vice versa.

The dynamically determined remaining travelling range **354** may be rendered at a user interface (UI) **381.** For example, the UI **381** may provide information to a driver of the vehicle regarding the need for energy replenishment (e.g., fuel refill or battery recharge). Alternatively or additionally, the UI **381** may provide information to an autonomous, or semi-autonomous, route planning system regarding the need for energy replenishment.

Alternatively or additionally, the dynamically determined remaining travelling range **354** may be used to dynamically adjust vehicle operation, as illustrated by **382;** typically to reduce energy consumption responsive to the determined remaining travelling range being shorter than a remaining anticipated route of the vehicle. The adjusted vehicle operation may be input to the VMM **380** (e.g., as motion requests) for implementation. The adjustment of the vehicle operation may take any suitable form. For example, the speed of the vehicle may be reduced, and/or auxiliary devices (e.g., a climate system) may be put in an energy saving mode. Further exemplification is provided in EP 4215875 A1. Generally, adjustments of the vehicle operation to reduce energy consumption may collectively be termed as range management. Also generally, an example of an anticipated route is a transport mission (e.g., where a certain delivery should be made to a certain location within a certain time).

In some examples, the predictor **351** may have access to a behavior model **370,** which describes how the wheel behaves under different operating conditions. The wheel behavior model **370** may be any suitable model for wheel behavior. For example, the behavior model **370** may provide a mapping between measurement data values and rolling resistance value and/or tire-road friction value. Alternatively or additionally, the model of wheel behavior may be a differential model associated with the tire.

For example, the predictor **351** may base the prediction on the wheel behavior model **370.** Alternatively or additionally, the wheel behavior model **370** may be updated based on the received measurement data. For example, if it is noted that the predicted value(s) of rolling resistance and/or tire-road friction seems erroneous, the model may be adjusted accordingly.

In some examples, the measurement data from the sensor arrangement **360** and/or corresponding metadata (e.g., measurement data statistics, predicted value(s), updated model, etc.) are uploaded to a wheel operating conditions database **390,** which is accessible (for upload and/or download) by one or more other vehicles. The uploaded information may be labeled to indicate a geographical location of the vehicle, and/or tire type. The database **390** may be configured to collect such uploaded information from a plurality of vehicles, and compile/consolidate it to provide corresponding statistics. Thereby, the database **390** may be able to provide reliable (up-to-date) and geographically detailed information regarding operating conditions. For example, the database **390** may be able to provide information (e.g., geographical location and rolling resistance and/or tire-road friction) relating to occurrence of slippery portions of an otherwise dry road under generally dry weather conditions.

The information of the database **390** may be shared (for upload and/or download) among authorized vehicles only. Alternatively, any vehicle may be allowed to download information of the database **390,** while only authorized vehicles are allowed to perform uploading.

To this end, the predictor **351** may be further configured to download further wheel operating conditions data (e.g., measurement data statistics, predicted value(s), updated model, etc.) from the wheel operating conditions database **390,** which may improve the performance of the predictor when the upcoming rolling resistance and/or the upcoming tire-road friction is further based on the downloaded further wheel operating conditions data. The further wheel operating conditions data may be associated with the current location of the vehicle and/or with the anticipated route of the vehicle. Furthermore, the further wheel operating conditions data may be associated with and tire type of the vehicle.

It may be noted that the further wheel operating conditions data from the wheel operating conditions database **390** may be built from measurements performed at different moments in time. Thus, some of the further wheel operating conditions data may be based on old measurements, and may therefore be less relevant since road conditions can change rapidly. Hence, it may be beneficial to relay not only on such further wheel operating conditions data, but to also have an on-board sensor arrangement.

It may also be noted that the statistics of the database **390** may comprise operating conditions information along continuous - or finely gridded - geographical lines (e.g., corresponding to routes that vehicles of a truck fleet using the suggested sensor arrangement travel).

Generally, the sensors may be configured to perform measurements at any suitable measurement intervals. For example, relatively rapid changes in the operating conditions might only be properly detected when the sensor arrangement is configured to perform measurements relatively often.

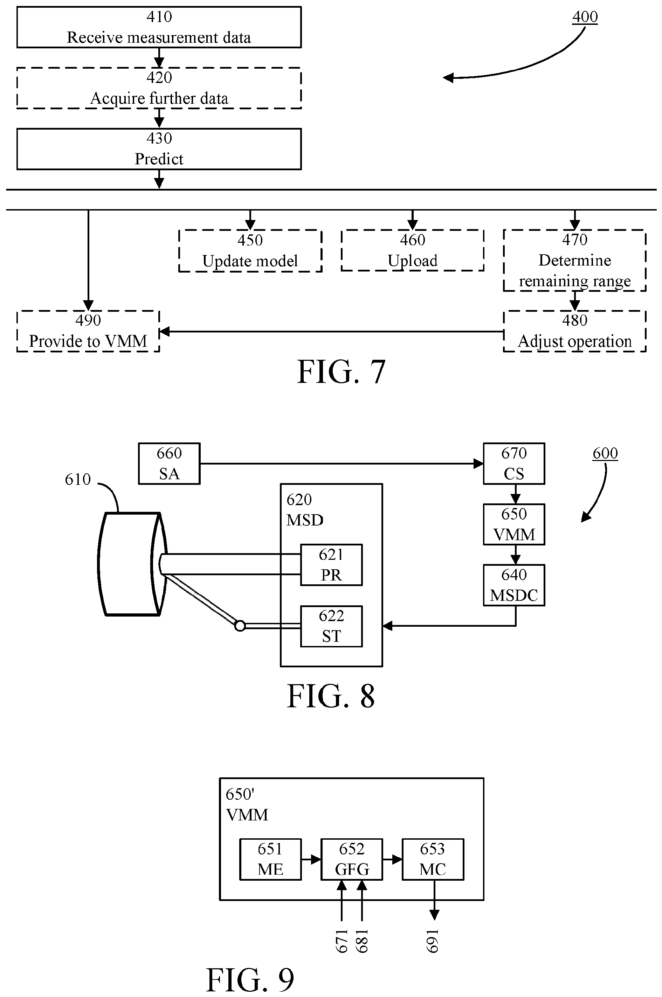

**FIG. 7** illustrates a method **400** according to some examples. The method **400** is a computer-implemented method, and may be implemented by processing circuitry of a computer system (e.g., any of the computer system **150 of** **FIG. 5****,** the VCU **250 of** **FIG. 2****,** and the computer system **350** of **FIG. 6****).**

As illustrated by step **410,** the method **400** comprises receiving measurement data from a sensor arrangement (e.g., any of the sensor arrangement **160** of **FIG. 5****,** the sensor arrangement **220** of **FIG. 2****,** and the sensor arrangement **360** of **FIG. 6****).**

As illustrated by optional step **420,** the method **400** may also comprise acquiring further data as described and exemplified herein (e.g., data from a climate system, data from a wiper sensor, remote source weather data, data from a wheel operating conditions database, etc.). Alternatively or additionally, step **420** may comprise acquiring data from one or more visual sensor(s) of the vehicle (e.g., camera(s)).

For example, step **410** and/or step **420** may be seen as comprised in step **34** of the method 30 in **FIG. 3****.**

As illustrated by step **430,** the method **400** also comprises predicting an upcoming rolling resistance and/or an upcoming tire-road friction based on the measurement data; and on the further data when applicable.

For example, step **430** may be seen as comprised in step **36** of the method 30 in **FIG. 3****.**

As illustrated by optional step **450,** the method **400** may also comprise updating the wheel behavior model based on the received measurement data.

For example, step **450** may be seen as comprised in step **35** of the method **30** in **FIG. 3****.**

As illustrated by optional step **460,** the method **400** may also comprise uploading the measurement data and/or corresponding metadata to a wheel operating conditions database, which is accessible by one or more other vehicles.

For example, step **460** may be seen as comprised in step **31** of the method 30 in **FIG. 3****.**

As illustrated by optional step **470,** the method **400** may also comprise dynamically determining a remaining travelling range until energy replenishment of the vehicle is needed based on the predicted upcoming rolling resistance.

As illustrated by optional step **480,** the method **400** may also comprise dynamically adjusting vehicle operation to reduce energy consumption responsive to the determined remaining travelling range being shorter than a remaining anticipated route of the vehicle.

As illustrated by optional step **490,** the method **400** may also comprise providing the predicted upcoming rolling resistance and/or upcoming tire-road friction to a VMM function. Alternatively or additionally optional step **490** may comprise providing the adjusted vehicle operation of step **480** to the VMM function.

**FIG. 8** schematically illustrates functionality **600** for actuation control of a wheel **610** according to some examples. The control of the wheel **610** is performed via some example motion support devices (MSDs) **620;** here comprising a propulsion device (PR) **621,** such as an electric machine (EM) and a power steering arrangement (ST) **622.** A power steering arrangement and a propulsion device are examples of actuators which can be controlled by one or more MSD control units (MSDC) **640.** It should be noted that any suitable actuator(s) may be used as MSD(s), and that **FIG. 8** only represents an example of MSDs. Other examples include various types of brakes.

A vehicle motion management (VMM) function **650** may be employed to perform force allocation to meet received motion requests in a safe and robust manner. The VMM function **650** communicates actuator instructions to the different MSDs via the MDS control unit(s). The VMM function **650** manages both force generation and MSD coordination; i.e., it determines what forces that are required for different wheels and vehicle units in order to fulfil the motion requests, for instance to accelerate the vehicle according to a requested acceleration profile and/or to generate a requested curvature motion by the vehicle. For example, the VMM function **650** may be comprised in the VCU **250** of **FIG. 2****.**

To determine the actuator instructions based on the motion requests, the VMM function **650** typically uses estimated/predicted parameter values associated with the operating conditions of the vehicle (e.g., to dynamically adjust limitations of the force allocation). Examples of such parameter values include rolling resistance and tire-road friction. The parameter values may be provided in the form of upcoming rolling resistance and/or upcoming tire-road friction from a computer system (CS) **670,** and may be based on measurement data from a sensor arrangement (SA) **660.** For example, the computer system **670** may comprise the processing circuitry **151** of **FIG. 5** and the sensor arrangement **660** may comprise the sensor arrangement **160** of **FIG. 5****.** Alternatively or additionally, the computer system **670** may be comprised in the VCU **250** of **FIG. 2** and the sensor arrangement **660** may comprise the sensor arrangement **260** of **FIG. 2****.** Yet alternatively or additionally, the computer system **670** may comprise the processing circuitry **350** of **FIG. 6** and the sensor arrangement **660** may comprise the sensor arrangement **360** of **FIG. 6****.** Yet alternatively or additionally, the computer system **670** may be configured to cause performance of (e.g., perform) one or more steps of the method **400** of **FIG. 7** and/or one or more steps of the method **30** of **FIG. 3****.**

**FIG. 9** schematically illustrates a simplified vehicle motion management (VMM) **650'** according to some examples. For example, the VMM **650'** may illustrate a possible implementation of the VMM function **650** of **FIG. 8****.** Alternatively or additionally, the VMM **650'** may be comprised in the vehicle control unit **250** of **FIG. 2****.**

The VMM **650'** comprises motion estimation (ME) **651,** global force generation (GFG) **452,** and motion coordination (MC) **653.**

The motion estimation **651** is configured to provide a representation of the current motion of the vehicle to the global force generation **652.** For example, the current motion may be represented by parameters such as vertical force *F_{z},* friction between road and tire µ, vehicle velocity in relation to a vehicle-centered coordinate system vₓ, road gradient (or road slope) α, road banking β, etc.

The global force generation **652** is configured to determine global forces elements *v* based on the representation of the current motion and based on motion requests **671** (e.g., an acceleration request, a steering angle, etc.), and to provide the determined global forces elements to the motion coordination **653.**

For example, the motion requests may originate from driver controls of the vehicle (e.g., steering wheel, accelerator pedal, brake pedal, etc.). Alternatively or additionally, the motion requests may originate from an autonomous - or semi-autonomous - driving control function of the vehicle (e.g., requesting longitudinal speed, longitudinal acceleration, steering angle, etc.).

The global force generation **652** may be improved by knowledge regarding upcoming rolling resistance and/or upcoming tire-road friction, which may be predicted as described herein and provided at **681.**

The motion coordination **653** is configured to determine actuator request elements u based on the global forces elements *v*. The motion coordination **653** is also configured to provide the actuator request elements u **691,** for operation of the motion support devices.

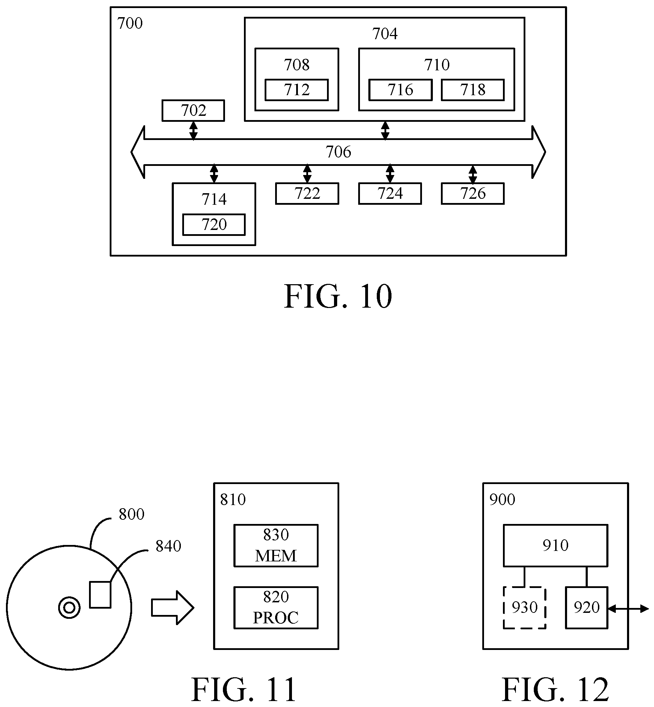

**FIG. 10** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or j ointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a VCU.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 11** illustrates a computer program product exemplified as a non-transitory computer-readable medium in the form of a compact disc (CD) ROM **800.** The computer-readable medium has stored thereon program code **840** comprising instructions. The program code is loadable into processing circuitry (PROC; e.g., a data processing unit) **820,** which may, for example, be comprised in a device **810,** such as a VCU or a server node. When loaded into the processing circuitry, the program code may be stored in a memory (MEM) **830** associated with, or comprised in, the processing circuitry. According to some examples, the program code may, when loaded into, and run by, the processing circuitry, cause execution of method steps according to, for example, any of the methods described herein.

**FIG. 12** schematically illustrates, in terms of a number of functional units, the components of a control unit **900** according to some examples. This control unit **900** may be comprised in the vehicle **200** (e.g., in the form of a VCU **250)** or in a server node. Processing circuitry **910** is provided using any combination of one or more of a suitable central processing unit CPU, multiprocessor, microcontroller, digital signal processor DSP, etc., capable of executing software instructions stored in a computer program product, e.g. in the form of a storage medium **930.** The processing circuitry **910** may further be provided as at least one application specific integrated circuit ASIC, or field programmable gate array FPGA.

Particularly, the processing circuitry **910** is configured to cause the control unit 900 to perform a set of operations, or steps, such as any of the methods discussed in connection to **FIGs. 3** and **7****.**

Consequently, there is disclosed herein a control unit **900** for controlling a heavy-duty vehicle **200** to predict road surface operating conditions of a vehicle as described herein.

For example, the storage medium **930** may store the set of operations, and the processing circuitry **910** may be configured to retrieve the set of operations from the storage medium **930** to cause the control unit **900** to perform the set of operations. The set of operations may be provided as a set of executable instructions. Thus, the processing circuitry **910** is thereby arranged to execute methods as herein disclosed. In particular, there is disclosed a control unit **900** for controlling an articulated vehicle **200** comprising a tractor **210** and/or one or more towed vehicle units **211,** the control unit comprising processing circuitry **910,** an interface **920** coupled to the processing circuitry **910,** and a memory **930** coupled to the processing circuitry **910,** wherein the memory comprises machine readable computer program instructions that, when executed by the processing circuitry, causes the control unit to perform the methods discussed herein.

The storage medium **930** may also comprise persistent storage, which, for example, can be any single one or combination of magnetic memory, optical memory, solid state memory or even remotely mounted memory.

The control unit **900** may further comprise an interface **920** for communications with at least one external device. As such, the interface **920** may comprise one or more transmitters and receivers, comprising analogue and digital components and a suitable number of ports for wireline or wireless communication.

The processing circuitry **910** controls the general operation of the control unit **900,** e.g., by sending data and control signals to the interface **920** and the storage medium **930,** by receiving data and reports from the interface **920,** and by retrieving data and instructions from the storage medium **930.** Other components, as well as the related functionality, of the control node are omitted in order not to obscure the concepts presented herein.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A computer system (700) for prediction of road surface operating conditions of a vehicle (17, 200), the computer system comprising processing circuitry (250) configured to:
receive (33) at least a portion of a shared operating conditions model (10) from a remote statistics processor;
receive (34) real-time sensor measurement data from sensors (90, 260, 160, 360) of the vehicle;
determine (35) a vehicle-specific operating conditions model (20) based on the portion of the shared operating conditions model and the real-time sensor measurement data;
use the vehicle-specific operating conditions model to predict (36) upcoming operating conditions for the vehicle; **characterized in that** the processing circuitry (250) is further configured to
cause the sensor measurement data to be uploaded (31) to the remote statistics processor.

2. A vehicle (17, 200) comprising the computer system of claim 1 and one or more sensor(s) for prediction of road surface operating conditions of the vehicle.

3. The vehicle of claim 2, wherein the one or more sensor(s) of the vehicle comprise at least one visual sensor and a sensor arrangement (160, 360) for determining upcoming operating conditions of a wheel of the vehicle, wherein the sensor arrangement comprises at least one temperature sensor (120, 320) mounted in vicinity of the wheel, and configured to measure a ground surface temperature of a portion of the ground surface to be traveled by the wheel and/or a tire temperature of the outer surface of a tire of the wheel.

4. The vehicle of claim 3, wherein
the at least one temperature sensor is further configured to measure an ambient temperature above the portion of the ground surface to be traveled by the wheel, and/or
the sensor arrangement further comprises a humidity sensor (130, 30) mounted in vicinity of the wheel, and configured to measure an ambient humidity above the portion of the ground surface to be traveled by the wheel, and/or
the sensor arrangement further comprises an audio sensor (140, 340) mounted in vicinity of the wheel, and configured to measure sound above the portion of the ground surface to be traveled by the wheel.

5. A computer-implemented method (30) for prediction of road surface operating conditions of a vehicle, the method comprising:
receiving (33), by processing circuitry of a computer system, at least a portion of a shared operating conditions model from a remote statistics processor;
receiving (34), by the processing circuitry, real-time sensor measurement data from sensors of the vehicle;
determining (35), by the processing circuitry, a vehicle-specific operating conditions model based on the portion of the shared operating conditions model and the real-time sensor measurement data;
using, by the processing circuitry, the vehicle-specific operating conditions model to predict (36) upcoming operating conditions for the vehicle; **characterized by**
causing, by the processing circuitry, the sensor measurement data to be uploaded (31) to the remote statistics processor.

6. The method of claim 5, wherein the portion of the shared operating conditions model is determined by a location of the vehicle and/or a time of reception of the portion of the shared operating conditions model.

7. The method of any of claims 5-6, wherein the vehicle-specific operating conditions model provides respective certainty metrics for road surface operating condition type(s), and wherein the upcoming operating conditions for the vehicle are predicted by road surface operating condition type selection based on the certainty metrics.

8. A computer program product (800) comprising program code for performing, when executed by the processing circuitry, the method of any of claims 5-7.

9. A non-transitory computer-readable storage medium (800) comprising instructions, which when executed by the processing circuitry, cause the processing circuitry to perform the method of any of claims 5-7.

## Patentansprüche

1. Ein Computersystem (700) zur Vorhersage von Betriebsbedingungen der Straßenoberfläche eines Fahrzeugs (17, 200), wobei das Computersystem eine Verarbeitungsschaltung (250) umfasst, die dazu ausgelegt ist:
mindestens einen Teil eines gemeinsamen Betriebsbedingungenmodells (10) von einem entfernten Statistikprozessor zu empfangen (33);
Echtzeit-Sensormessdaten von Sensoren (90, 260, 160, 360) des Fahrzeugs zu empfangen (34);
ein fahrzeugspezifisches Betriebsbedingungenmodell (20) auf Grundlage des Teils des gemeinsamen Betriebsbedingungenmodells und der Echtzeit-Sensormessdaten zu bestimmen (35);
das fahrzeugspezifische Betriebsbedingungenmodell zu verwenden, um vorausliegende Betriebsbedingungen für das Fahrzeug vorherzusagen (36); **dadurch gekennzeichnet, dass** die Verarbeitungsschaltung (250) ferner dazu ausgelegt ist,
zu veranlassen, dass die Sensormessdaten an den entfernten Statistikprozessor hochgeladen (31) werden.

2. Ein Fahrzeug (17, 200), umfassend das Computersystem nach Patentanspruch 1 und einen oder mehrere Sensor(en) zur Vorhersage von Betriebsbedingungen der Straßenoberfläche des Fahrzeugs.

3. Das Fahrzeug nach Patentanspruch 2, wobei der eine oder die mehreren Sensor(en) des Fahrzeugs mindestens einen visuellen Sensor und eine Sensoranordnung (160, 360) zum Bestimmen vorausliegender Betriebsbedingungen eines Rads des Fahrzeugs umfassen, wobei die Sensoranordnung mindestens einen Temperatursensor (120, 320) umfasst, der in der Nähe des Rads montiert und dazu ausgelegt ist, eine Bodenoberflächentemperatur eines Abschnitts der von dem Rad zu befahrenden Bodenoberfläche und/oder eine Reifentemperatur der Außenfläche eines Reifens des Rads zu messen.

4. Das Fahrzeug nach Patentanspruch 3, wobei
der mindestens eine Temperatursensor ferner dazu ausgelegt ist, eine Umgebungstemperatur oberhalb des Abschnitts der von dem Rad zu befahrenden Bodenoberfläche zu messen, und/oder
die Sensoranordnung ferner einen Feuchtigkeitssensor (130, 30) umfasst, der in in der Nähe des Rads und dazu ausgelegt, eine Umgebungsfeuchtigkeit oberhalb des Teils der von dem Rad zu befahrenden Bodenoberfläche zu messen und/oder
die Sensoranordnung umfasst ferner einen Audiosensor (140, 340), der in der Nähe des Rads montiert und dazu ausgelegt ist, Schall oberhalb des Teils der von dem Rad zu befahrenden Bodenoberfläche zu messen.

5. Ein computerimplementiertes Verfahren (30) zur Vorhersage von Betriebsbedingungen der Straßenoberfläche eines Fahrzeugs, wobei das Verfahren umfasst:
Empfangen (33), durch die Verarbeitungsschaltung eines Computersystems, mindestens eines Teils eines gemeinsamen Betriebsbedingungenmodells von einem entfernten Statistikprozessor;
Empfangen (34), durch die Verarbeitungsschaltung, von Echtzeit-Sensormessdaten von Sensoren des Fahrzeugs;
Bestimmen (35), durch die Verarbeitungsschaltung, eines fahrzeugspezifischen Betriebsbedingungenmodells auf Grundlage des Teils des gemeinsamen Betriebsbedingungenmodells und der Echtzeit- Sensormessdaten;
wobei die Verarbeitungsschaltung das fahrzeugspezifische Betriebszustandsmodell verwendet, um bevorstehende Betriebszustände des Fahrzeugs vorherzusagen (36); **dadurch gekennzeichnet, dass** die Verarbeitungsschaltung veranlasst, dass die Strommessdaten an den entfernten Statistikprozessor hochgeladen (31) werden.

6. Das Verfahren nach Patentanspruch 5, wobei der Teil des gemeinsamen Betriebsbedingungenmodells durch einen Standort des Fahrzeugs und/oder einen Zeitpunkt des Empfangs des Teils des gemeinsamen Betriebsbedingungenmodells bestimmt wird.

7. Das Verfahren nach einem der Patentansprüche 5-6, wobei das fahrzeugspezifische Betriebsbedingungenmodell jeweilige Gewissheitsmetriken für Betriebsbedingungstyp(en) der Straßenoberfläche bereitstellt und wobei die vorausliegenden Betriebsbedingungen für das Fahrzeug durch eine Auswahl von Betriebsbedingungstypen der Straßenoberfläche auf Grundlage der Gewissheitsmetriken vorhergesagt werden.

8. Ein Computerprogrammprodukt (800), umfassend Programmcode zum Durchführen, wenn von der Verarbeitungsschaltung ausgeführt, das Verfahren nach einem der Patentansprüche 5-7.

9. Ein nichttransitorisches computerlesbares Speichermedium (800), umfassend Weisungen, die, wenn sie von der Verarbeitungsschaltung ausgeführt werden, die Verarbeitungsschaltung dazu veranlassen, das Verfahren nach einem der Patentansprüche 5-7 durchzuführen.

## Revendications

1. Un système informatique (700) pour la prédiction de conditions de fonctionnement de surface de route d'un véhicule (17, 200), le système informatique comprenant une circuiterie de traitement (250) configurée pour :
recevoir (33) au moins une portion d'un modèle de conditions de fonctionnement partagées (10) d'un processeur de statistiques distant ;
recevoir (34) des données de mesure de capteur en temps réel provenant de capteurs (90, 260, 160, 360) du levéhicule ;
déterminer (35) un modèle de conditions de fonctionnement propres au véhicule (20) sur la base de la portion du modèle de conditions de fonctionnement partagées et des données de mesure de capteur en temps réel ;
utiliser le modèle de conditions de fonctionnement propres au véhicule pour prédire (36) des conditions de fonctionnement à venir pour le véhicule ; **caractérisé en ce que** la circuiterie de traitement (250) est en outre configurée pour
faire en sorte que les données de mesure de capteur soient téléversées (31) vers le processeur de statistiques distant.

2. Un véhicule (17, 200) comprenant le système informatique de la revendication 1 et un ou plusieurs capteur(s) pour la prédiction de conditions de fonctionnement de surface de route du véhicule.

3. Le véhicule de la revendication 2, dans lequel l'ou les capteur(s) du véhicule comprennent au moins un capteur visuel et un agencement de capteurs (160, 360) pour déterminer des conditions de fonctionnement à venir d'une roue du véhicule, dans lequel l'agencement de capteurs comprend au moins un capteur de température (120, 320) monté à proximité de la roue, et configuré pour mesurer une température de surface du sol d'une portion de la surface du sol devant être parcourue par la roue et/ou une température de pneu de la surface extérieure d'un pneu de la roue.

4. Le véhicule de la revendication 3, dans lequel
l'au moins un capteur de température est en outre configuré pour mesurer une température ambiante au-dessus de la portion de la surface du sol devant être parcourue par la roue, et/ou
l'agencement de capteurs comprend en outre un capteur d'humidité (130, 30) monté dans à proximité de la roue, et configuré pour mesurer une humidité ambiante au-dessus de la partie de la surface du sol devant être parcourue par la roue, et/ou
l'agencement de capteurs comprend en outre un capteur audio (140, 340) monté à proximité de la roue, et configuré pour mesurer le son au-dessus de la partie de la surface du sol devant être parcourue par la roue.

5. Un procédé mis en œuvre par ordinateur (30) pour la prédiction de conditions de fonctionnement de surface de route d'un véhicule, le procédé comprenant :
la réception (33), par la circuiterie de traitement d'un système informatique, d'au moins une partie d'un modèle de conditions de fonctionnement partagées provenant d'un processeur de statistiques distant ;
la réception (34), par la circuiterie de traitement, de données de mesure de capteur en temps réel provenant de capteurs du véhicule ;
la détermination (35), par la circuiterie de traitement, d'un modèle de conditions de fonctionnement propres au véhicule sur la base de la partie du modèle de conditions de fonctionnement partagées et des données de mesure de capteur en temps réel ;
en utilisant, par le circuit de traitement, le modèle des conditions de fonctionnement spécifiques au véhicule afin de prédire (36) les conditions de fonctionnement à venir du véhicule ; **caractérisé en ce que** le circuit de traitement provoque le téléchargement (31) des données de mesure des capteurs vers le processeur statistique distant.

6. Procédé selon la revendication 5, dans lequel la partie du modèle de conditions de fonctionnement partagées est déterminée par la position du véhicule et/ou l'heure de réception de la partie du modèle de conditions de fonctionnement partagées.

7. Le procédé selon l'une quelconque des revendications 5 à 6, dans lequel le modèle de conditions de fonctionnement propres au véhicule fournit des métriques de certitude respectives pour un ou plusieurs types de conditions de fonctionnement de surface de route, et dans lequel les conditions de fonctionnement à venir pour le véhicule sont prédites par une sélection de types de conditions de fonctionnement de surface de route sur la base des métriques de certitude.

8. Un produit de programme informatique (800) comprenant un code de programme pour exécuter, lorsque exécuté par la circuiterie de traitement, le procédé selon l'une quelconque des revendications 5 à 7.

9. Un support de stockage non transitoire lisible par ordinateur (8o0) comprenant des instructions, qui, lorsqu'elles sont exécutées par la circuiterie de traitement, amènent la circuiterie de traitement à exécuter le procédé selon l'une quelconque des revendications 5 à 7.
